# EUROPÄISCHE PATENTANMELDUNG

(11) **EP 2 044 998 A1**
(43) Veröffentlichungstag der Anmeldung: **08.04.2009**
(21) Anmeldenummer: 09000489.6
(22) Anmeldetag: 19.09.2006
(51) Int. Cl.: B01D 46/24, B01D 46/42, B01D 27/10, B01D 35/14, B60T 17/00

(54) **System aus einer einem Nutzfahrzeug zugeordneten Luftaufbereitungsanlage und einer Luftfilterpatrone**

(30) Priorität: 20.10.2005 DE 102005050635
(62) Teilanmeldung aus: 06805769.4
(71) Anmelder: KNORR-BREMSE Systeme für Nutzfahrzeuge GmbH, 80809 München (DE)
(72) Erfinder: Uhland, Matthias, 89073 Ulm (DE); Hilberer, Eduard, 68766 Hockenheim (DE); Krockenberger, Klaus, 90547 Stein (DE)
(74) Vertreter: Mattusch, Gundula

(57) **Zusammenfassung**

Die Erfindung betrifft System aus einer einem Nutzfahrzeug zugeordneten Luftaufbereitungsvorrichtung (12) und einer Luftfilterpatrone (10) zur Montage an der Luftaufbereitungsvorrichtung (12), wobei die Luftfilterpatrone einen Transponder (14) umfassende Identifikationsmittel (14) aufweist, deren Informationsgehalt durch eine an der Luftaufbereitungsvorrichtung angeordnete Erfassungseinrichtung (16) erfassbar ist.

Erfindungsgemäß ist vorgesehen, dass die die Identifikationsmittel (14) und die Erfassungseinrichtung (16) im montierten Zustand auf einander gegenüberliegenden Flächen der Luftfilterpatrone (10) und eines Ventilgehäuses (20) eine Funkstrecke minimaler Länge realisieren.

Die Erfindung betrifft weiterhin eine Luftfilterpatrone (10) zur Montage an einer einem Nutzfahrzeug zugeordneten Luftaufbereitungsvorrichtung (12).

## Beschreibung

Die Erfindung betrifft ein System aus einer einem Nutzfahrzeug zugeordneten Luftaufbereitungsvorrichtung und einer Luftfilterpatrone zur Montage an der Luftaufbereitungsvorrichtung, wobei die Luftfilterpatrone einen Transponder umfassende Identifikationsmittel aufweist, deren Informationsgehalt durch eine an der Luftaufbereitungsvorrichtung angeordnete Erfassungseinrichtung erfassbar ist.

Die Erfindung betrifft weiterhin eine Luftfilterpatrone zur Montage an einer einem Nutzfahrzeug zugeordneten Luftaufbereitungsvorrichtung, wobei die Luftaufbereitungsvorrichtung einer Erfassungseinrichtung umfasst und die Luftfilterpatrone einen Transponder umfassende Identifikationsmittel aufweist, deren Informationsgehalt durch die an der Luftaufbereitungsvorrichtung angeordnete Erfassungseinrichtung erfassbar ist.

Es wird weiterhin ein Verfahren zum Erkennen von Eigenschaften einer Luftfilterpatrone zur Montage an einer Luftaufbereitungsvorrichtung eines Nutzfahrzeugs beschrieben.

Zahlreiche Funktionen in Nutzfahrzeugen beruhen auf der Verwendung von Druckluft. Als Druckluftverbraucher kommen beispielsweise pneumatische Bremsanlagen, Luftfederungen und Liftachseinrichtungen in Frage. Diesen und anderen Verbrauchern wird die Druckluft über eine Luftaufbereitungsvorrichtung zur Verfügung gestellt. Moderne Luftaufbereitungseinrichtungen arbeiten auf der Grundlage einer elektronischen Steuerung, und sie enthalten für den Betrieb des pneumatischen Systems des Nutzfahrzeugs wichtige Komponenten, beispielsweise einen Druckregler, ein Mehrkreisschutzventil und eine Luftfilterpatrone. Die Luftfilterpatrone dient insbesondere dazu, die vom Kompressor geförderte Luft zu trocknen und zu reinigen.

Üblicherweise werden die Luftfilterpatronen auf das Ventilgehäuse der Luftaufbereitungseinrichtung aufgeschraubt, wobei im Sinne einer Standardisierung und einer Optimierung der Anschlusseigenschaften die Anschlussmaße festgelegt sind. Da das Anschlussgewinde festigkeitsoptimiert ist, lässt es sich in der Gewindeart und im Gewindedurchmesser nicht beliebig verändern.

Trotz dieser identischen Anschlussmaße existieren durchaus unterschiedliche Luftfilterpatronen, die insbesondere verschiedene Wirkungsweisen und/oder verschiedene Trocknungsbeziehungsweise Reinigungsleistungen aufweisen. Angesichts der identischen Anschlussbedingungen ist dies problematisch, denn es kann so immer wieder vorkommen, dass im Zuge einer Reparatur oder eines Service beim Filterpatronentausch Patronen mit Eigenschaften aufgeschraubt werden, die mit dem Luftaufbereitungssystem des Nutzfahrzeugs nicht oder nur schlecht kompatibel sind. Durch die falsche Wirkungsweise wird die Laufleistung des Systems erheblich reduziert. Dies wird schlimmstenfalls dann erst im Schadensfall bemerkt.

Neben der dargestellten Problematik besteht weiterhin ein Bedürfnis, den Wechsel einer Luftfilterpatrone zum richtigen Zeitpunkt vorzunehmen, das heißt nicht zu spät, um so die Funktionstüchtigkeit der Druckluftversorgung aufrechtzuerhalten, aber auch nicht zu früh, um so nicht eine eigentlich noch funktionstüchtige Luftfilterpatrone entsorgen zu müssen.

Der Erfindung liegt die Aufgabe zugrunde, eine Sendeleistung der Erfassungseinrichtung für eine Überprüfung der korrekten Montage der Luftfilterpatrone zu verwenden.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung baut auf dem gattungsgemäßen System dadurch auf, dass die Identifikationsmittel und die Erfassungseinrichtung im montierten Zustand auf einander gegenüberliegenden Flächen der Luftfilterpatrone und eines Ventilgehäuses eine Funkstrecke minimaler Länge realisieren.

Nützlicherweise kann vorgesehen sein, dass der Transponder einen Code enthält, der durch die elektromagnetische Erfassungseinrichtung auslesbar ist.

Vorteilhafterweise kann vorgesehen sein, dass die Identifikationsmittel einen Barcode umfassen, der durch eine optische Erfassungseinrichtung auslesbar ist.

Besonders bevorzugt ist, dass die Erfassungseinrichtung in ein Steuergerät der Luftaufbereitungseinrichtung integriert ist.

Weiterhin kann vorgesehen sein, dass die Identifikationsmittel Informationen über den Typ der Luftfilterpatrone enthalten.

Insbesondere kann vorgesehen sein, dass die Identifikationsmittel die Luftfilterpatrone individuell kennzeichnen.

Die gattungsgemäße Luftfilterpatrone wird dadurch weiterentwickelt, dass die Identifikationsmittel und die Erfassungseinrichtung auf einander gegenüberliegenden Flächen der Luftfilterpatrone und eines Ventilgehäuses der Luftaufbereitungseinrichtung eine Funkstrecke minimaler Länge realisieren, wenn die Luftfilterpatrone an der Luftaufbereitungsvorrichtung montiert ist.

Es wird eine Luftfilterpatrone beschrieben, wobei die Luftfilterpatrone Identifikationsmittel aufweist, deren Informationsgehalt durch eine Erfassungseinrichtung erfassbar ist. Aufgrund der Erfassung von Informationen, die der Luftfilterpatrone zugeordnet sind, kann sowohl überwacht werden, dass beim Wechsel der Luftfilterpatrone keine falsche Luftfilterpatrone aufgeschraubt wird, als auch sichergestellt werden, dass eine Luftfilterpatrone zum richtigen Zeitpunkt gewechselt wird.

Nützlicherweise ist vorgesehen, dass die Identifikationsmittel einen Transponder umfassen, wobei der Transponder einen Code enthält, der durch eine elektromagnetische Erfassungseinrichtung auslesbar ist. Mit einem solchen Transponder bedient man sich einer allgemein verfügbaren Technologie, um der Luftfilterpatrone die geforderten Eigenschaften zu vermitteln.

Ebenfalls kann vorgesehen sein, dass die Identifikationsmittel einen Barcode umfassen, der durch eine optische Erfassungseinrichtung auslesbar ist. Auch hierbei handelt es sich um eine allgemein verfügbare Technologie, um objektspezifische Daten automatisch zu erfassen und in geeigneter Weise auszuwerten.

Es ist besonders bevorzugt, dass die Erfassungseinrichtung in ein Steuergerät der Luftaufbereitungseinrichtung integriert ist. Moderne Luftaufbereitungsanlagen verfügen über ein elektronisches Steuergerät, das zahlreiche Grundfunktionen der Druckluftversorgung steuert. Ein solches Steuergerät verfügt unter anderem über einen Mikrocontroller, Speichervorrichtungen und eine Datenschnittstelle, so dass es auf dieser Grundlage geeignet ist, die durch die Erfassungseinrichtung erfassten Daten auszuwerten und zur beliebigen Weiterverarbeitung zur Verfügung zu stellen.

Gemäß einer besonders bevorzugten Ausführungsform ist vorgesehen, dass die Identifikationsmittel Informationen über den Typ der Luftfilterpatrone enthalten. Durch die Information über den Typ kann sichergestellt werden, dass eine Filterpatrone nur durch eine typgleiche Filterpatrone ersetzt werden darf.

Gemäß einer weiteren bevorzugten Ausführungsform ist vorgesehen, dass die Identifikationsmittel die Luftfilterpatrone individuell kennzeichnen. Diese individuellen Informationen können besonders nützlich im Hinblick auf die Sicherstellung der geeigneten Serviceintervalle genutzt werden.

Es ist bevorzugt, dass die Luftfilterpatrone Identifikationsmittel aufweist, deren Informationsgehalt durch eine Erfassungseinrichtung erfasst wird.

In diesem Sinne kann vorgesehen sein, dass die Identifikationsmittel einen Transponder umfassen, wobei der Transponder einen Code enthält, der durch eine elektromagnetische Erfassungseinrichtung ausgelesen wird.

Auf dieser Grundlage ist das Verfahren insbesondere dadurch weitergebildet, dass nach Einschalten der Zündung des Nutzfahrzeugs von einer Sende- und Empfansantenne der Erfassungseinrichtung ein elektromagnetisches Feld im Bereich des Transponders aufgebaut wird, dass der Transponder veranlasst durch das elektromagnetische Feld einen Code enthaltende elektromagnetische Strahlung aussendet, dass die von dem Transponder ausgesendete elektromagnetische Strahlung durch die Sende- und Empfangsantenne der Erfassungseinrichtung erfasst wird und dass der Code mit gespeicherten Daten verglichen wird. Durch den Vergleich des Codes mit den gespeicherten Daten kann dann insbesondere ermittelt werden, ob eine Luftfilterpatrone vom richtigen Typ aufgeschraubt ist.

Gemäß einer weiteren Ausführungsform des Verfahrens ist vorgesehen, dass die Identifikationsmittel einen Barcode umfassen, der durch eine optische Erfassungseinrichtung ausgelesen wird.

Im Hinblick auf die Ausrüstung der Luftaufbereitungsvorrichtung mit einer Luftfilterpatrone vom richtigen Typ ist vorgesehen, dass die Identifikationsmittel Informationen über den Typ der Luftfilterpatrone enthalten und dass im Falle einer Abweichung von einem vorgesehenen Typ ein Warnsignal erzeugt wird. Beim Vorliegen eines solchen Warnsignals ist somit dafür Sorge zu tragen, eine Luftfilterpatrone von einem anderen Typ aufzuschrauben, so dass dann kein Warnsignal mehr vorliegt.

Im Hinblick auf die Optimierung der Wartung ist nützlicherweise vorgesehen, dass die Identifikationsmittel die Luftfilterpatrone individuell kennzeichnen und dass die auf der Grundlage der individuellen Kennzeichnung verfügbare Information im Hinblick auf die Wartung der Luftaufbereitungsanlage berücksichtigt wird.

Die Erfindung wird nun mit Bezug auf die begleitenden Zeichnungen anhand besonders bevorzugter Ausführungsformen beispielhaft erläutert.

Es zeigen:
- Figur 1: eine Luftaufbereitungsvorrichtung mit Luftfilterpatrone und deren datenmäßige Anbindung an weitere Komponenten eines Nutzfahrzeugs;
- Figur 2: einen Teil einer Luftaufbereitungsvorrichtung mit Luftfilterpatrone und insbesondere die Anordnung von Identifikationsmitteln und einer Erfassungseinrichtung und
- Figur 3: eine schematische Darstellung eines Bordrechners, eines Steuergerätes und weiterer Komponenten eines Nutzfahrzeugs sowie die Kommunikation dieser Komponenten untereinander.

Bei der nachfolgenden Beschreibung von bevorzugten Ausführungsformen der Erfindung bezeichnen gleiche Bezugszeichen gleiche oder vergleichbare Komponenten. Die Erfindung wird beispielhaft anhand einer Luftfilterpatrone mit einem Transponder beschrieben, wobei grundsätzlich jegliche Identifikationsmittel im Rahmen der Erfindung zum Einsatz kommen können, die durch eine Erfassungseinrichtung automatisch auslesbar sind.

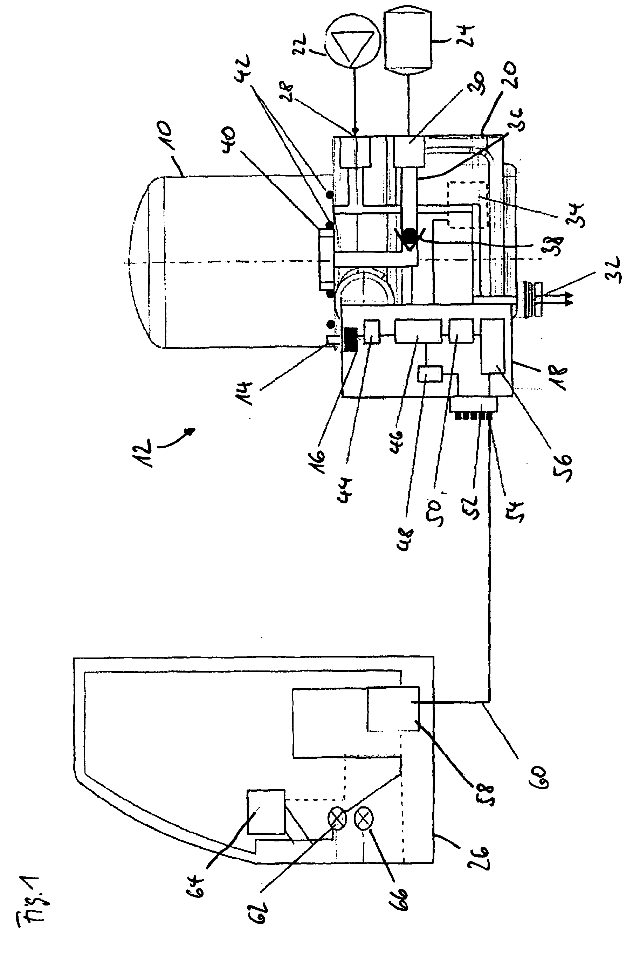

Figur 1 zeigt eine Luftaufbereitungsvorrichtung mit Luftfilterpatrone und deren datenmäßige Anbindung an weitere Komponenten eines Nutzfahrzeugs. Die Luftaufbereitungsvorrichtung 12 umfasst als wesentliche Bestandteile eine Filterpatrone 10, ein Ventilgehäuse 20 mit darin angeordneten pneumatischen, elektrischen und elektropneumatischen Komponenten und ein an dem Ventilgehäuse angeordnetes Steuergerät 18. In der Peripherie der Luftaufbereitungsvorrichtung 12 sind ein Kompressor 22 zur Bereitstellung von Druckluft, ein für mehrere Vorratsbehälter beispielhaft dargestellter Vorratsbehälter 24 und eine Fahrerkabine 26 zu erkennen.

Im Bereich des Ventilgehäuses 20 sind ein Förderleitungsanschluss 28, ein Verbraucheranschluss 30, eine Entlüftung 32 und ein Ablassventil 34 enthalten. Es sind weiterhin Kanäle erkennbar, die von Druckluft durchströmbar sind, wobei in dem Kanal 36 ein Rückschlagventil 38 vorgesehen ist, das eine Strömung von der Filterpatrone 10 zum Verbraucheranschluss 30 zulässt und eine umgekehrte Strömung unterbindet.

Die Filterpatrone 10 ist über ein Anschlussgewinde 40 mit dem Ventilgehäuse 20 verbunden, wobei diese Verbindung über Dichtungen 42 abgedichtet ist.

Das Steuergerät 18 enthält eine Erfassungseinrichtung 16 mit einer Sende- und Empfangsantenne, einen damit in Verbindung stehenden Decoder 44, einen mit dem Decoder 44 in Verbindung stehenden Mikrocontroller 46, eine Schnittstelle 48 zur seriellen Kommunikation, einen Stecker 52, der unter anderem einen Anschluss 54 für die serielle Kommunikation aufweist, einen Schreib- und Lesespeicher 50 und ein Netzteil 56. Diese und andere Komponenten dienen der Steuerung der Druckluftversorgung sowie der Erkennung von Eigenschaften der Luftfilterpatrone 10.

Das beschriebene System arbeitet wie folgt. Nach Einschalten der Zündung erzeugt die Sende- und Empfangsantenne der Erfassungseinrichtung 16 im Bereich des auf die Filterpatrone 10 aufgeklebten oder in dieser eingestemmten Transponders elektrische Strahlung mit einer bestimmten Frequenz. Die elektromagnetischen Wellen werden von dem Transponder 14 entsprechend zu einem gespeicherten Code moduliert und reflektiert. Zu diesem Zweck kann ein passiver Transponder 14 eingesetzt werden, der ohne eine eigene Energieversorgung auskommt. Die Erfassungseinrichtung überträgt die empfangenen Signale an den Decoder 44. Nachfolgend wird eine Plausibilitätsprüfung vorgenommen, indem von dem Decoder 44 decodierte Signale mit in dem Speicher 46 gespeicherten Daten verglichen werden. Die für diese Belange erforderlichen Mittel können in dem Mikrocontroller 46 implementiert sein. Stimmen die decodierten Daten nicht mit den gespeicherten Daten überein, so sendet das Steuergerät über die Schnittstelle 58 und den Stecker 52 beziehungsweise dessen Anschluss für die serielle Kommunikation 54 entsprechende Informationen an einen im Führerhaus 26 angeordneten Bordrechner 58. Diese Übertragung kann über den CAN-Bus 60 des Nutzfahrzeugs erfolgen. Der Bordrechner 58 kann nun eine Warnlampe 62 ansteuern sowie entsprechende Informationen auf einem Anzeige- und Diagnosedisplay 64 anzeigen, wobei das Anzeige- und Diagnosedisplay vorzugsweise mit einem Steuergerät ausgestattet ist. Die Warnlampe 62, die eine fehlerhafte Luftfilterpatrone 10 anzeigt, kann im Bereich anderer Anzeigen 66 innerhalb der Fahrerkabine angeordnet sein.

Wie oben beschrieben, kann die Überprüfung des Typs der Filterpatrone 10 immer dann erfolgen, wenn die Zündung des Fahrzeugs eingeschaltet wird. Es ist aber auch denkbar, dass die Prüfung durch andere Ereignisse veranlasst wird, beispielsweise immer beim Einschrauben der Filterpatrone 10 stattfindet oder durch das Betätigen eines Tasters in Gang gesetzt wird.

Es wurde erläutert, dass in dem Speicher 50 Daten gespeichert sind, mit denen der decodierte Code des Transponders 14 verglichen wird. Es ist möglich, dass diese Daten im Speicher 50 unveränderlich gespeichert sind. Ebenfalls ist es denkbar, diese Daten durch äußeren Eingriff zu ändern, beispielsweise im Rahmen einer Wartung. Eine weitere Möglichkeit zur Änderung der Daten kann vorgesehen sein, nämlich durch Übernahme der im Transponder vorhandenen Informationen in den Speicher. Letzteres kann nützlich sein, wenn für eine bestimmte Luftaufbereitungseinrichtung eine andersartige Filterpatrone 10 zum Einsatz kommen soll. Es reicht dann aus, die neuartige Filterpatrone 10 einzusetzen und durch beispielsweise die Betätigung eines nicht ohne Weiteres zugänglichen Tasters zu veranlassen, dass in dem Speicher Daten abgelegt werden, die der Information im Transponder 14 der neuen Filterpatrone 10 entsprechen.

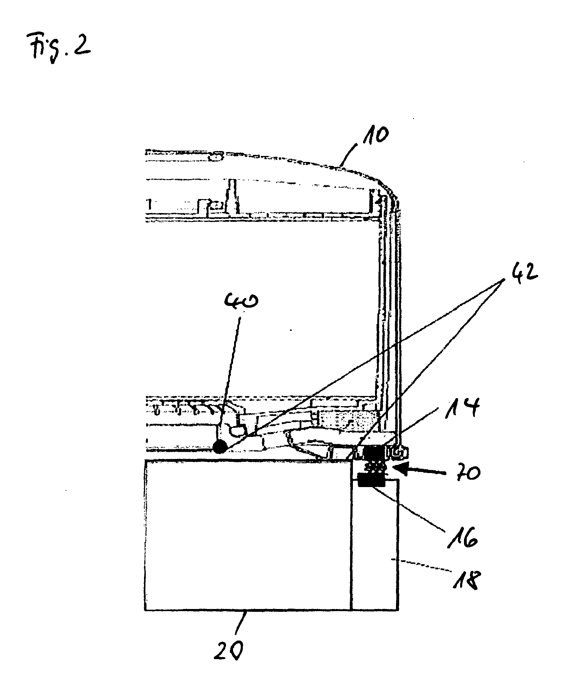

Figur 2 zeigt einen Teil einer Luftaufbereitungsvorrichtung mit Luftfilterpatrone und insbesondere die Anordnung von Identifikationsmitteln und einer Erfassungseinrichtung. Es ist zu erkennen, dass der Transponder 14 und die Sende- und Empfangsantenne der Erfassungseinrichtung 16 gegenüberliegend angeordnet sind, um so eine möglichst kurze Funkstrecke 70 zu realisieren. Auf dieser Grundlage kommt man mit geringen Sendeleistungen aus, was im Hinblick auf die weiteren elektronischen Komponenten in dem Steuergerät 18 nur von Vorteil sein kann.

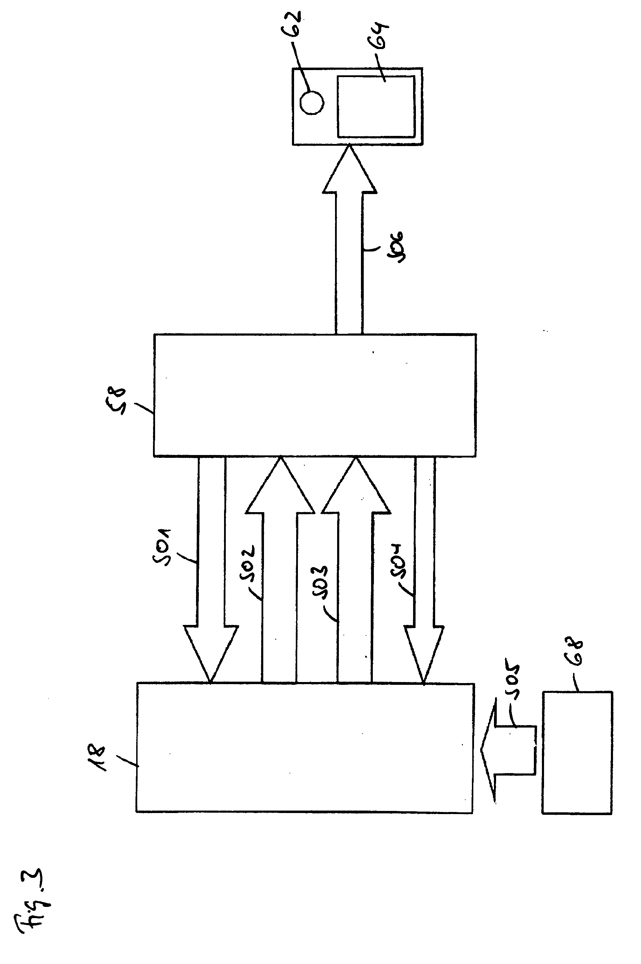

Figur 3 zeigt eine schematische Darstellung eines Bordrechners, eines Steuergerätes und weiterer Komponenten eines Nutzfahrzeugs, sowie die Kommunikation dieser Komponenten untereinander. Neben der beschriebenen Überwachung des richtigen Filterpatronentyps dient das dargestellte System auch der Optimierung der Wartung. Zu diesem Zweck enthält das Steuergerät 18 Daten, wie die Echtzeit, das Datum und den Kilometerstand des Nutzfahrzeugs. Weitere Daten können vorhanden sein, wie eine noch maximal zulässige Fahrstrecke beziehungsweise Betriebszeit. Im Falle eines Werkstattbesuchs kann weiterhin ein Service-Reset gespeichert werden. In dem Falle, dass die Luftfilterpatrone 10 gewechselt wurde, sendet das Steuergerät 18 eine Resetanforderung, um die Daten im Wortrechner 58 zurückzusetzen.

Figur 3 zeigt neben dem Steuergerät 18, dem Bordrechner 58, und der Einheit mit Warnlampe 62 und Anzeige- und Diagnosedisplay eine Motormanagementeinheit 68 sowie die zwischen den einzelnen Komponenten ausgetauschten Signale. Diese Signale sind im Einzelnen ein Service-Reset S01, eine Rücksetzanforderung S02, die Information über den nächsten Filterpatronenwechsel beziehungsweise die maximal noch zulässige Kilometerleistung S03 und Signale bezüglich Echtzeit, Datum, Kilometerstand usw. S04. Die Signale S01 und S04 werden von dem Bordrechner 58 an das Steuergerät 18 übergeben, während die Signale S02 und S03 von dem Steuergerät an den Bordrechner übergeben werden. Ein weiteres Signal S05, nämlich die Motordrehzahl wird dem Steuergerät 18 von der Motormanagementeinheit 68 zur Verfügung gestellt. Ein Signal S06 kann im Falle einer falschen Filterpatrone vom Bordrechner 58 an die Einheit mit Display 64 und Warnlampe 62 übergeben werden. Auf der Grundlage dieses Signalaustauschs führt das Steuergerät 18 die folgenden Funktionen aus:
- Abschätzen der Filterpatronenabnutzung unter Berücksichtigung von Informationen der Motormanagementeinheit 68 und der Laufzeit.
- Ermittlung der noch maximal zulässigen Laufzeit des Filters.
- Überprüfung, ob der Filterwechsel bereits vollzogen wurde.
- Überprüfung, ob die passende Filterpatrone eingesetzt wurde.
- Verknüpfung der Daten mit der Kilometerinformation und der Echtzeitinformation.
- Anpassen des Regenerationsverhaltens.

Der Bordrechner 58 verwaltet im Wesentlichen die folgenden Informationen:
- Fahrerinformationen.
- Warnungen.
- Das Servicemanagement.
- Informationen bezüglich des normalen oder des reduzierten Serviceintervalls.

Die Informationen im Hinblick auf das normale oder reduzierte Serviceintervall resultieren aus der Anpassung des Regenerationsverhaltens, nämlich dadurch, dass bei reduziertem Wirkungsgrad der Filterpatrone die Regenerationsluftmenge erhöht wird.

Für den Fall, dass ein Service empfohlen wird, kombiniert der Bordrechner dies mit weiteren, von anderen Steuergeräten aufgelaufenen Serviceempfehlungen und sendet an das Display 64 eine Vorwarnung oder eine Warnung. Entsprechend werden Anzeigen ausgegeben.

Wird ein Serviceaufenthalt abgeschlossen, so werden die entsprechenden Daten der gewarteten Einheiten über Offboarddiagnose zurückgesetzt. Wurde die Filterpatrone gewechselt, so erkennt dies das Steuergerät 18 des Lufttrockners auf der Grundlage der individuellen im Transponder gespeicherten Informationen, oder dem Steuergerät wird diese Information auf andere Weise übermittelt.

In dem Fall, dass während des Service ein Filter falscher Bauweise aufgeschraubt wurde, wird dies ebenfalls durch das Steuergerät 18 erkannt, und an den Bordrechner 58 wird eine Fehlermeldung gesendet. Diese Fehlermeldung wird im Rahmen der Offboarddiagnose dokumentiert.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Filterpatrone
- 12: Luftaufbereitungsvorrichtung
- 14: Identifikationsmittel
- 16: Erfassungseinrichtung
- 18: Steuergerät
- 20: Ventilgehäuse
- 22: Kompressor
- 24: Vorratsbehälter
- 26: Fahrerkabine
- 28: Förderleitungsanschluss
- 30: Verbraucheranschluss
- 32: Entlüftung
- 34: Ablassventil
- 36: Kanal
- 38: Rückschlagventil
- 40: Anschlussgewinde
- 42: Dichtungen
- 44: Decoder
- 46: Mikrocontroller
- 48: Schnittstelle
- 50: Schreib- und Lesespeicher
- 52: Stecker
- 54: Anschluss
- 56: Netzteil
- 58: Bordrechner
- 60: CAN-Bus
- 62: Warnlampe
- 64: Anzeige
- 66: weitere Anzeigen
- 68: Motormanagementeinheit
- 70: Funkstrecke

## Patentansprüche

1. System aus einer einem Nutzfahrzeug zugeordneten Luftaufbereitungsvorrichtung (12) und einer Luftfilterpatrone (10) zur Montage an der Luftaufbereitungsvorrichtung (12), wobei die Luftfilterpatrone einen Transponder (14) umfassende Identifikationsmittel (14) aufweist, deren Informationsgehalt durch eine an der Luftaufbereitungsvorrichtung angeordnete Erfassungseinrichtung (16) erfassbar ist, **dadurch gekennzeichnet, dass** die Identifikationsmittel (14) und die Erfassungseinrichtung (16) im montierten Zustand auf einander gegenüberliegenden Flächen der Luftfilterpatrone (10) und eines Ventilgehäuses (20) eine Funkstrecke minimaler Länge realisieren.

2. System nach Anspruch 1, **dadurch gekennzeichnet, dass** der Transponder (14) einen Code enthält, der durch die elektromagnetische Erfassungseinrichtung (16) auslesbar ist.

3. System nach Anspruch 1 oder 2, **dadurch gekennzeichnet, dass** die Identifikationsmittel einen Barcode umfassen, der durch eine optische Erfassungseinrichtung auslesbar ist.

4. System nach einem vorhergehenden Ansprüche, **dadurch gekennzeichnet, dass** die Erfassungseinrichtung in ein Steuergerät (18) der Luftaufbereitungseinrichtung (12) integriert ist.

5. System nach einem der vorhergehenden Ansprüche, **dadurch gekennzeichnet, dass** die Identifikationsmittel (14) Informationen über den Typ der Luftfilterpatrone (10) enthalten.

6. System nach einem der vorhergehenden Ansprüche, **dadurch gekennzeichnet, dass** die Identifikationsmittel (14) die Luftfilterpatrone (10) individuell kennzeichnen.

7. Luftfilterpatrone (10) zur Montage an einer einem Nutzfahrzeug zugeordneten Luftaufbereitungsvorrichtung (12), wobei die Luftaufbereitungsvorrichtung (12) eine Erfassungseinrichtung (16) umfasst und die Luftfilterpatrone (10) einen Transponder (14) umfassende Identifikationsmittel (14) aufweist, deren Informationsgehalt durch die an der Luftaufbereitungsvorrichtung (12) angeordnete Erfassungseinrichtung (16) erfassbar ist, **dadurch gekennzeichnet, dass** die Identifikationsmittel (14) und die Erfassungseinrichtung (16) auf einander gegenüberliegenden Flächen der Luftfilterpatrone (10) und eines Ventilgehäuses (20) der Luftaufbereitungseinrichtung (12) eine Funkstrecke minimaler Länge realisieren, wenn die Luftfilterpatrone (10) an der Luftaufbereitungsvorrichtung (12) montiert ist.
